# EUROPEAN PATENT SPECIFICATION

(11) **EP 0 292 336 B1**
(45) Date of publication and mention of the grant of the patent: **24.03.1993**
(21) Application number: 88304667.4
(22) Date of filing: 23.05.1988
(51) Int. Cl.: B29C 47/00, B29D 7/00, B29C 55/06

(54) **Linear low density polyethylene cast film**
Flachfolie aus linearem Polyäthylen niedriger Dichte
Feuille coulée en polyéthylène linéaire basse densité

(30) Priority: 22.05.1987 US 53239
(43) Date of publication of application: 23.11.1988
(73) Proprietor: THE DOW CHEMICAL COMPANY, Midland Michigan 48640-1967 (US)
(72) Inventor: Dohrer, Katryn K., Clute Texas 77531 (US); Niemann, Debra H., Angleton Texas 77515 (US)
(74) Representative: Raynor, John

(56) References cited:
- EP-A- 0 107 076
- GB-A- 2 124 139
- US-A- 4 608 221
- JOURNAL OF APPLIED POLYMER SCIENCE, vol. 24, no. 1, July 1979, pages 61-87, John Wiley & Sons, Inc., New York, US; C.D. HAN et al.: "Studies on melt spinning. VIII. The effects of molecular structure and cooling conditions on the severity of draw resonance"
- M. AHMED: "POLYPROPYLENE FIBERS - SCIENCE AND TECHNOLOGY", 1982, pages 237-254, Elsevier Scientific Publishing Co., Amsterdam, NL
- CHEMICAL ABSTRACTS, vol. 94, no. 2, 12th January 1981, page 45, no. 4850r, Columbus, Ohio, US; A. GHIJSELS et al.: "Draw resonance studies on polypropylene melts" & RHEOL., [PROC. INT. CONGR.], 8TH 1980, 3, 15-24

## Description

The invention relates to the production of films of linear low density polyethylene (LLDPE) and, in particular, provides for the use of fast line speeds by selecting LLDPE of high resistance to draw resonance.

It is known that low density polyethylene (LDPE) made by the high pressure polymerization of ethylene, using a free radical initiator, can be cast into films using fast line speeds. The films so-produced lack sufficient impact strength and tensile properties for many of the applications for which a polymer film is desired. These LDPE polymers are characterized by the presence of long chain-branching along the polymer chains,
Linear low density polyethylene (LLDPE), which is known to be a linear polymer prepared using a coordination catalyst, contains a higher olefin comonomer (C₃-C₁₂) interpolymerized into the polymer chain, but because of the substantial absence of long chain-branching, the interpolymer exhibits appreciably different properties when molten, and when solid, as compared to LDPE and "HDPE". HDPE (a linear high density ethylene homopolymer) is made ln substantially the same manner as LLDPE, but without the comonomer; it is the presence of the comonomer in the copolymer which causes the density of LLDPE to be lower than the HDPE homopolymer. In the presently described invention, the density of the LLDPE may be in the same density range as LDPE, or even lower, if enough of a given comonomer is used in the copolymer, or may be in an intermediate range (i. e. 0.94 to 0.955 gm/cc) when a lesser amount of the given comonomer is used. These linear polymers are made using a coordination catalyst, such as the Ziegler-type or Phillips-type catalyst, not with a free radical initiator such as used in making LDPE. The LLDPE polymers may be made in substantial accordance with, e.g. US-A-4,302,566 or US-A-4,076,698, especially the latter, so long as the catalyst and/or process conditions used are those which will produce the low ratio of I₁₀/I₂ required for the present invention, such as by using the catalyst described in US-A-4,612,300.

Whereas it is known that LDPE can be cast into films using fast line speeds, it is also known that stronger films are obtained with LLDPE. Persons attempting to cast LLDPE, in order to obtain stronger films, have encountered problems when trying to cast the films at line speeds as fast as that used with LDPE. The problems with using fast line speeds when casting films of LLDPE have been attributed to the onset to "draw resonance".

The expression "draw resonance" or "surging" is defined in, e.g., US-A-4,339,507 as "... a limit cycle corresponding to a sustained periodic oscillation in the velocity and cross-sectional area of a drawing process when the boundary conditions are a fixed velocity at the exit of an extruder and a fixed velocity at the take-off position. It occurs when the draw ratio exceeds a critical value. Draw resonance or surging can be thought of as an instability in take-off phenomenon of a material coming from an extruder, more or less homogeneously. The instability manifests itself in the occurrence of periodic fluctuations in the extrudate dimensions such as film thickness when a critical value of the take-up speed is exceeded. Surging may be so extreme as to actually break a web or film that extrudes from a die and totally shut down an extrusion coating process." The expressions "draw-down", "draw ratio", "melt strength", and "neck-in" are also defined in the patent. The patent discloses that LLDPE suffers from deficiencies in processing which include problems with draw resonance and with high neck-in. The invention claimed in the patent is an extrusion coating process which uses a blend of LDPE polymer and LLDPE polymer to obtain the desired extrusion properties.

In AlChE Journal (Vol. 24, No. 3), May 1978, on page 418, there is an article by Jae Chun Hyun titled "Part 1. Newtonian Fluids" which offers theoretical considerations related to draw resonance in melt spinning of fibers and films.

Chang Dae Han et al (J. Appl. Polym. Sci., 24 (1979) 61-87) reported the effects of molecular structure and cooling conditions on the draw resonance of viscoelastic polymers including, inter alia, HDPE, during melt spinning of fibers. They concluded that the severity of draw resonance depends strongly on the distribution of molecular weight and molecular structure and that cooling may increase the severity of draw resonance of viscoelastic fluids in general but the degree varies from material to material. A broad molecular weight distribution (BMWD) was found to give rise to lower melt strength and to lower critical stretch ratio for the onset of draw resonance than a narrow molecular weight distribution (NMWD).

C.A. 94:4850r (1981) reports that the draw resonance in spinning of isotactic polypropylene melts depends upon, inter alia, the molecular structure of the polymer. In particular, the critical draw ratio for the onset of draw resonance was found to increase with decreasing molecular weight and with decreasing width of molecular weight distribution.

M. Ahmed ("Polypropylene Fibers-Science and Technology", Elsevier Scientific Publishing Co. (1982), 237-254) reports that the intensity of draw resonance in polypropylene spinning is dependent, inter alia, on molecular weight distribution. In particular, NMWD polypropylene was found to have a lesser tendency for draw resonance than BMWD polypropylene.

It is reported in EP-A-0107076 (1984) and US-A-4608221 (1986) that extensional rheology characteristics are important in commercial extrusion processes and can dominate over shear rheology characteristics. LDPE was found to be soft in shear and stiff in extension compared with LLDPE, which exhibits the opposite rheology. Although this difference in strain hardening allows LLDPE to be drawn down at greater rates than LDPE without melt breakage, the greater susceptibility of LLDPE to draw resonance is believed to be due to lower stress build-up with drawing. Extensional viscosity and shear thinning are both reported to be higher in BMWD resins than NMWD resins and accordingly this prior art would appear to teach that draw resonance of LLDPE would decrease with increasing molecular weight distribution.

GB-A-2,124,139 (published 2015084) discloses that LLDPE, having a propensity for draw resonance at high draw speeds, is drawn into a film using a draw roller located not more than 6 inches (15 cm) from the die so as to have a short draw-gap.

EP-A-0107076 (corresponding to US-A-4,486,377) proposes that the draw resonance problem, found in drawing films of LLDPE, is reduced by directing a fluid medium, preferably air, against the molten film between the die and a rapid cooling zone. The preferred LLDPE for use in that invention has a molecular weight distribution (Mw/Mn) between 2.4 and 5.0, preferably between 2.8 and 3.4. These distributions correspond to a melt flow ratio (i.e. Flow Rate as determined by ASTM 1238, Condition F divided by Melt Index as determined by ASTM D1238, Condition E) of between 20 and 37 and between 25 and 32 respectively. In the absence of the fluid medium, the onset of draw resonance of all LLDPE tested in the Examples was recorded at 300 fpm (1.5 m/s) or less.

In an article titled "Reducing Draw Resonance in LLDPE Film Resins" by Peter J. Lucchesi et al, published in PLASTICS ENGINEERING, May, 1985, it is reported that LLDPE experiences resonance even at very low draw rates, largely due to its lack of long-chain branching. The article also states that "... the only known way to reduce the draw resonance of LLDPE is to cool the extrudate gradually rather than expose it to the shock-cooling of a water bath or chill-roll". The article suggests the use of a "draw resonance eliminator (DRE)" which involves the use of a fluid medium (air) against the molten film between the die and the nip and chill roll (see above acknowledgement of EP-A-0107076/US-A-4486377).

Authors E. H. Roberts et al in an article titled "New Processes For The Reduction of Draw Resonance in Melt Embossing And Extrusion Coating" published in 1985 in LAMINATIONS & COATINGS CONFERENCE/TAPPI Proceedings, also reported on the "Draw Resonance Eliminator (DRE)". The same authors also reported on the same subject in an article published in ANTEC, 1985.

US-A-4,608,221 reports that the problem of draw resonance can be overcome by extruding LLDPE film into a rapid cooling zone provided with a tensioning device between the die and the nip of a pressure roll and a chill roll. The tensioning device provides a substantially friction free surface with respect to the moving film and is responsive to tension variations in the moving film between the die and the rapid cooling zone to maintain substantially constant tension in the moving film. The same LLDPE is preferred as in EP-A-0107076/US-A-4486377. The only exemplified process uses line speeds of 200 to 300 fpm (1 to 1.5 m/s) and is compared with a process according to EP-A- 0107076/US-A-4486377 operating at the same speeds.

There is a perceived need for other means of avoiding draw resonance problems when extruding LLDPE which avoids having to add other polymers to it and avoids having to apply mechanical changes in the extrusion equipment whereby the drawing process is altered. The present invention substantially fills such need, as described hereinafter. However, if one already has made modifications in a cast film or extrusion coating process or equipment used therefor, or wishes to use a blend of LLDPE with another polymer (such as LDPE and the like), then the present invention can still be used to good advantage in such processes or equipment, or with such blends, and obtain the benefits of the combination of techniques.

A broad aspect of the invention is a process in which LLDPE polymer is formed into a film by an extrusion-casting or an extrusion-coating technique, and in which the LLDPE polymer consists essentially of ethylene interpolymerized with from 1 percent to 60 percent by weight of at least one alkene of C₃-C₁₂ to form an interpolymer having a density in the range of from 0.87 to 0.955 gm/cc and has a melt index, I₂, in the range of 0.1 to 25 gm/10 minutes as determined by ASTM D-1238-E; characterized by using LLDPE polymer having an I₁₀/I₂ ratio in the range of 4.0 to 8.3, where the value of I₁₀ is determined by ASTM D-1238-N; whereby faster line speeds are obtained without onset of draw resonance.

We have now found that LLDPE can be designed to have a high resistance to draw resonance, allowing it to be drawn into films at line speeds previously thought to be unattainable without using additives or by using certain special equipment. This high resistance has, very unexpectedly in view of aforementioned US-A-4,608,221, been attained by designing an LLDPE polymer which has an unusually narrow molecular weight distribution as indicated by an I₁₀/I₂ ratio of not greater than 8.3. This permits the extrusion casting and extrusion coating of LLDPE at line speeds approaching, and in some cases surpassing, the line speeds which can be used with LDPE.

Furthermore, when such an LLDPE polymer is used in combination with an additive (such as another polymer) which helps alleviate draw resonance problems, or when used with a draw resonance eliminator (DRE), or when used with a very short draw-gap, (all these known techniques being referred to above), then the benefits of the combination are obtained.

The properties of the LLDPE polymer used in the present invention, which we refer to at times as a "fast-draw" LLDPE, are usually as follows:
It is a copolymer of ethylene containing from 1 to 60 percent, preferably from 1 to 40 percent by weight of at least one higher olefin of C₃-C₁₂, preferably at least one of those in the range of C₄-C₈, most especially octene-1; these olefins are represented by the formula H₂C=CH-R, where R represents a hydrocarbon moiety containing from 1 to 10 carbon atoms, especially butene, pentene, 4-methyl pentene-1, hexene, or octene, or a mixture of such olefins;
It has a density in the range of 0.87 to 0.955 gm/cc, preferably in the range of 0.88 to 0.950 gm/cc, most preferably 0.88 to 0.945 gm/cc (as measured by ASTM D-1248;
It has an I₂ value in the range of 0.1 to 25 gm/10 minutes, preferably 1.0 to 10, most preferably 1.5 to 6 (as determined by ASTM D-1238-E, which is the ASTM method used in determining "standard melt flow", also known as "melt index"); on the other hand, the I₁₀ value is determined by using ASTM D-1238-N;
It is critical, for purposes of this invention, that within the above described I₂ range, the LLDPE has an I₁₀/I₂ ratio of 4.0 to 8.3, preferably less than 8.0, more preferably less than 7.5, especially less than 7.0. In this invention, the lower the said ratio at a given I₂ value, the better, so far as attaining fast line speeds in extrusion-casting or extrusion-coating is concerned.

The polymer used in this invention has a narrow molecular weight distribution (MWD). It can be prepared using a coordination catalyst which produces narrow molecular weight distribution LLDPE, such as is described in US-A-4,612,300; the invention is, however, not limited to only those in accordance with US-A-4,612,300, but any other catalyst and/or process found to produce such narrow MWD may be used. It will be understood that the smaller the I₁₀/I₂ ratio, the narrower will be the MWD.

Considering that the cast film market and the extrusion coating market, for which the presently claimed inventive process is especially designed, is currently dominated by LDPE, then some discussion of the differences between LDPE and LLDPE is appropriate here.

LDPE has been used for many years in cast applications and has been found to draw at adequate line speeds for large scale operations. However, it has its deficiencies such as in the more recently designed disposable diapers which employ refastenable tapes. These refastenable tapes require that the polymer film be strong enough to resist tearing when the tape is peeled off; LDPE was found to be deficient in the necessary tensile strength and tear strength. This change in the diapers brought about a need for a polymer film which would have the strength to withstand the peeling off of the tape, yet which would not appreciably slow down the manufacturing process. LLDPE not only is found to have the strength needed to withstand the peeling off of the tape, but we have found that one can obtain fast line speeds when extrusion-casting or extrusion-coating films of LLDPE without encountering the draw resonance problems for which LLDPE is well known in the industry, by using LLDPE polymers designed to have an I₁₀/I₂ ratio as described in this disclosure.

It will be understood that the LLDPE polymers which are used in the practice of the present invention will have applications other than in making diapers, and the making of diapers is just one application in which LLDPE can be used to good advantage if the problem of draw resonance is alleviated in order to cast the films at fast line speeds.

As used in this disclosure, the expressions "fast draw" and "fast line speeds" are in reference to the speeds obtainable with LLDPE and indicate speeds which appreciably approach, or even surpass, the speeds obtainable with LDPE using the same extrusion equipment and conditions.

The following examples illustrate some particular embodiments of the present invention, but the invention is not limited to the particular embodiments shown. It will be appreciated by practitioners of these arts that the exact maximum line speeds one can attain with one type of extruder or coater will not necessarily be the same as one may attain with another extruder or coater. For purposes of making useful comparisons of results, one should use the same extruder or coater with all the samples being tested.

In the following Examples 1-3, the temperature settings are summarized in Table II. The equipment consists of an Egan coextrusion cast film line with the identical sample being fed through both extruders. The extruders are a 2.5" (6.5 cm) 24:1 L/D Egan extruder with a Maddock mixing section in parallel with and a 3.5" (9 cm) 32:1 L/D Egan extruder, also with a Maddock mixing section. A 30-inch (75 cm) Johnson "coat hanger" die with flex lips providing a die gap of about 22 mils (0.56 mm) is attached. The film contacts two chrome plated chill rolls that have a mirror finish. A CMR® 1000 Microprocessor computer is an integral part of the system for control and monitoring the equipment conditions. A Fife Model OSP-2-40 Beta thickness gauge is used to monitor thickness.

Also in the following examples, the LLDPE polymers comprise ethylene interpolymerized with a sufficient amount of octene-1 to produce the density shown for each resin sample. The densities of the LLDPE samples are quite close to each other, which makes comparisons more readily evaluated. The following Table I describes the polymers:

**TABLE I**

| Resin | I₂ gm/10 min | I₁₀/I₂ Ratio | Density gm/cc |
|---|---|---|---|
| A | 2.3 | 6.5 | 0.936 |
| B | 2.5 | 8.3 | 0.934 |
| E | 2.1 | 8.3 | 0.940 |
| F | 2.1 | 8.2 | 0.941 |
| G | 2.1 | 7.4 | 0.941 |
| H | 2.2 | 7.0 | 0.941 |
| K | 2.2 | 6.6 | 0.941 |
| LDPE* | 1.8 | 10.5 | 0.923 |

| | | | |
|---|---|---|---|
| *The LDPE is used for comparisons only and does not represent an example of the present invention. | | | |

### Example 1

Resins A and B are tested on the above described equipment. The test consists of increasing the rpm and the line speed concurrently to maintain 1.2 mils (0.03 mm) thickness. The point of draw resonance is determined visually when the web becomes unstable.

The A sample exhibits a maximum line speed of 1400 fpm (7 m/s) and the B sample exhibits a maximum line speed of 800 fpm (4 m/s).

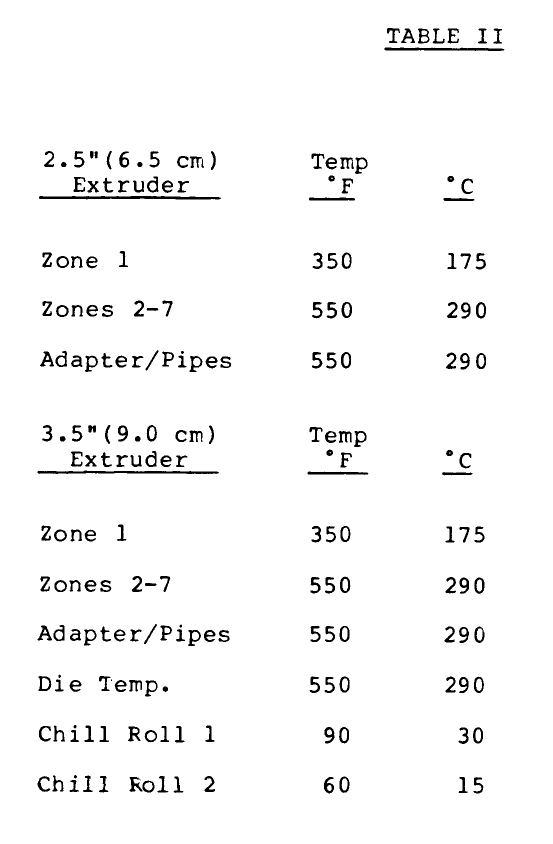

### Example 2

Another cast film trial is conducted using a greater number of resins, i.e. LLDPE E-K. Table III presents data for samples E-K compared with LDPE.

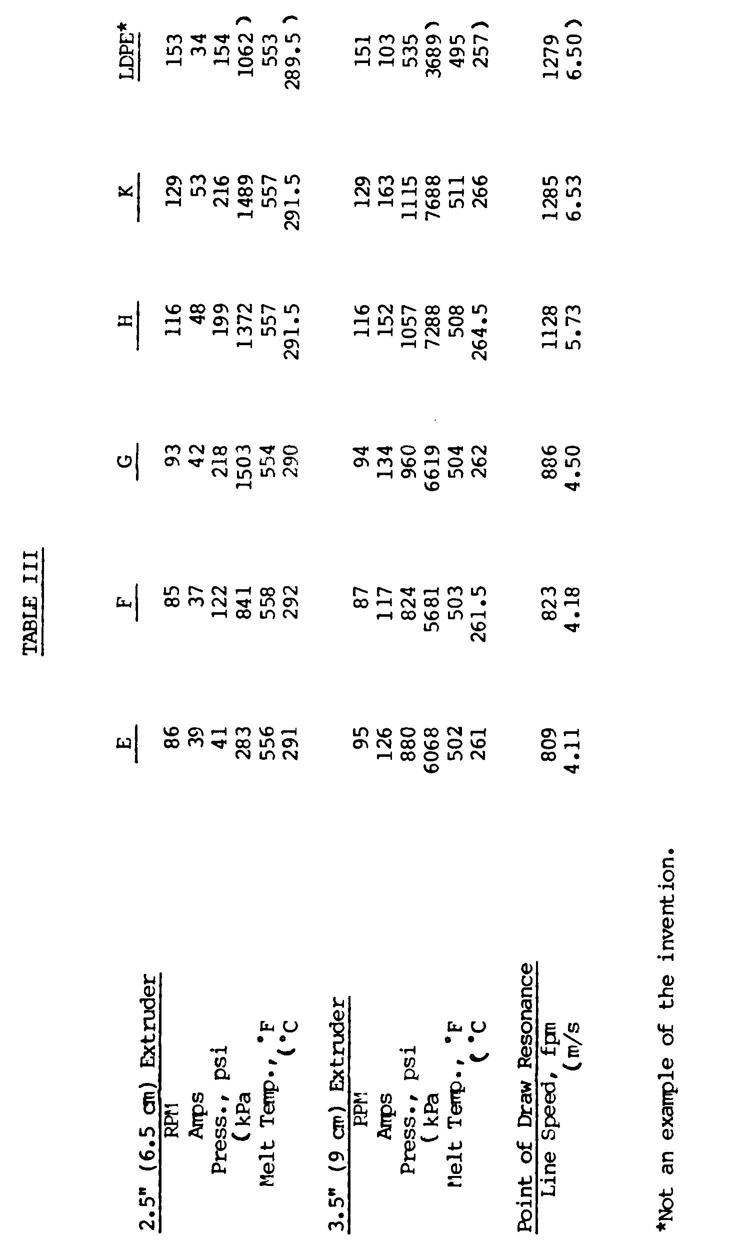

### Example 3

Samples E-K, fabricated substantially as above in comparison with LDPE , with the extruder rpm adjusted to maintain a film thickness of 1.2 mils (0.03 mm) at a line speed of 450 fpm (2.3 m/s), exhibit significantly greater ultimate tensile strength, tensile yield, percent elongation and toughness (ASTM D-882) than the LDPE as illustrated in Table IV below, in both "machine direction" (MD) and "cross direction" (CD).

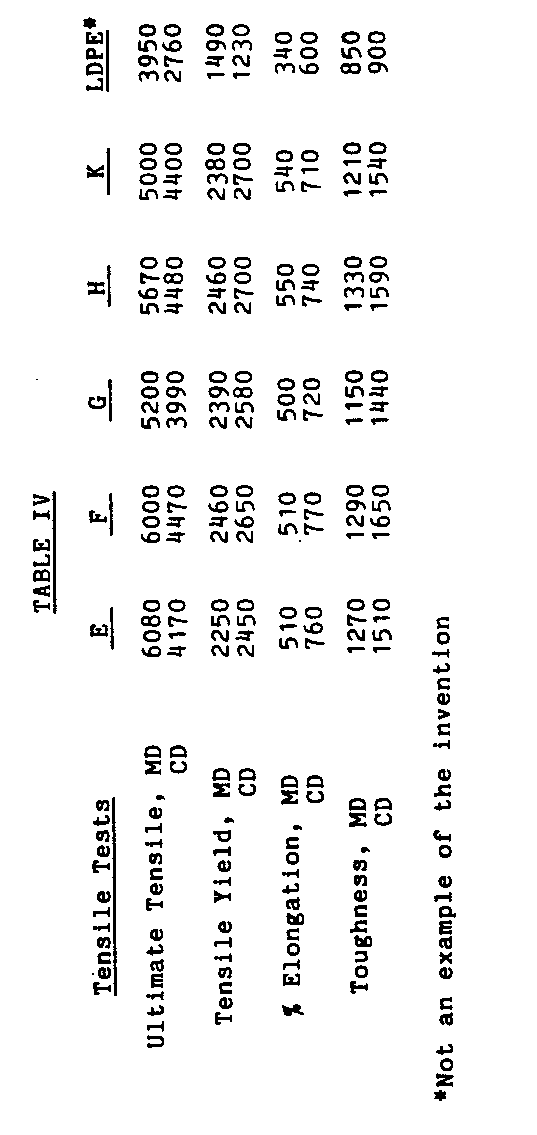

### Example 4

Samples A and B are evaluated on a 3.5" (9 cm) Black Clawson Model 435 30:1 L/D extrusion coating equipment with a 150 HP (110 kW) Electro;Flyte drive system; the die is a 30" (75 cm) Black Clawson, Model 300XLHL. The resin is coated onto Kraft paper at a melt temperature of 550°F (290°C) and at an RPM of 51. Sample A, which has the narrower I₁₀/I₂ ratio also achieves the faster line speed.

### Examples 5A - 5B

Two different ethylene/octene copolymers (LLDPE) having a density of 0.941 gm/cc and an I₂ melt index of 4.0 gm/10 minutes and an I₁₀/I₂ ratio of (i) 7.2; and (ii) 6.8 gm/10 minutes were extrusion-cast on the same equipment under the same processing conditions. The copolymer having an I₁₀/I₂ ratio of 6.8 could be processed at a maximum line speed that was about 25 percent higher than that obtainable at an I₁₀/I₂ ratio of 7.2.

### Examples 6A - 6B

From other experimental work it has been predicted that line speed during extrusion-coating onto Kraft paper, using a nip-draw, of LLDPE having a density of 0.916 gm/cc and an I₂ melt index of 25 gm/10 minutes, would be increased by about ten percent by reducing the I₁₀/I₂ ratio from 8.5 to 7.0.

### Examples 7A - 7B

From other experimental work it is predicted that line speed during extrusion-casting of LLDPE polymer having a density of 0.920 gm/cc and an I₂ melt index of 1.0 gm/10 minutes, would be increased by about fifteen percent by reducing the I₁₀/I₂ratio from 8.1 to 7.1.

### Comparative Example 8A AND Example 8B

From other experimental work it is predicted that maximum line speed during extrusion-coating onto kraft paper, using a nip-draw, of LLDPE having a density of 0.913 gm/cc and an I₂ melt index of 6 gm/10 minutes, would be increased by about 10 percent by reducing the I₁₀/I₂ ratio from 8.5 to 7.5.

## Claims

1. A process for increasing the line speed of extrusion-casting or extrusion-coating a LLDPE polymer film, said LLDPE polymer consisting essentially of ethylene inter-polymerized with from 1 percent to 60 percent by weight of at least one alkene of C₃-C₁₂ to form an interpolymer having a density in the range of from 0.87 to 0.955 gm/cc and having a melt index, I₂, in the range of 0.1 to 25 gm/10 minutes as determined by ASTM D-1238-E;
characterized by selecting the LLDPE polymer to have an I₁₀/I₂ ratio in the range of 4.0 to 8.3, where the value of I₁₀ is determined by ASTM D-1238-N.

2. A process as claimed in Claim 1, wherein said ratio is less than 8.0.

3. A process as claimed in Claim 2, wherein said ratio is less than 7.0.

4. A process as claimed in any one of the preceding claims, wherein I₂ is in the range of 1 to 10 gm/10 minutes and the line speed is greater than 4 m/s (800 feet per minute).

5. A process as claimed in any one of the preceding claims, wherein the LLDPE comprises an ethylene interpolymer containing from 1 percent to 40 percent of at least one comonomer selected from the group represented by the formula H₂C=CH-R, where R represents a hydrocarbon moiety containing from 1 to 10 carbon atoms.

6. A process as claimed in any one of the preceding claims, wherein the LLDPE comprises an interpolymer of ethylene with at least one comonomer of the group consisting of butene, 4-methyl pentene-1, hexene, and octene.

7. A process as claimed in Claim 6, wherein the LLDPE comprises an interpolymer of ethylene and octene.

8. A process as claimed in any one of the preceding claims, wherein the LLDPE has a density in the range of 0.88 to 0.945 gm/cc.

9. A process as claimed in any one of the preceding claims, wherein I₂ is in the range of 1.5 to 6 gm/10 minutes.

10. A process as claimed in any one of the preceding claims, wherein the said LLDPE is used in conjunction with at least one of the following:
(a) a constant tension device;
(b) a coolant gas which is directed onto the film between the extrusion die and the nip roll as the film is extruded and drawn;
(c) an extruder wherein the draw roller is located not more than 15 cm (6 inches) from the extrusion die; and
(d) an olefin polymer blended in the LLDPE.

11. A process as claimed in any one of Claims 1 to 9, wherein the film is extrusion-cast or extrusion-coated without the use of specific equipment to improve draw resonance resistance, and the line speed is above 1.5 m/s (300 feet per minute).

12. A process as claimed in any one of Claims 1 to 9, wherein the film is extrusion-cast or extrusion-coated without the use of a draw resonance eliminator or tension control device acting on the molten film to improve draw resonance resistance, and the line speed is above 1.5 m/s (300 feet per minute).

## Patentansprüche

1. Verfahren zur Erhöhung der Bahngeschwindigkeit beim Spritzgießen oder Extrusionsbeschichten einer LLDPE-Polymerfolie, wobei dieses LLDPE-Polymere im wesentlichen aus Ethylen, mischpolymerisiert mit von 1 bis 60 Gew.-% wenigstens eines C₃-C₁₂-Alkens unter Bildung eines Mischpolymeren mit einer Dichte im Bereich von 0,87 bis 0,955 g/cm³ und mit einem Schmelzindex, I₂, in dem Bereich von 0,1 bis 25 g/10 min, bestimmt nach ASTM D-1238-E, besteht, gekennzeichnet durch Auswahl des LLDPE-Polymeren, das ein I₁₀/I₂-Verhältnis im Bereich von 4,0 bis 8,3 besitzt, wobei der Wert von I₁₀ nach ASTM D-1238-N bestimmt ist.

2. Verfahren nach Anspruch 1, worin dieses Verhältnis weniger als 8,0 beträgt.

3. Verfahren nach Anspruch 2, worin dieses Verhältnis weniger als 7,0 beträgt.

4. Verfahren nach einem der vorhergehenden Ansprüche, worin I₂ in dem Bereich von 1 bis 10 g/10 min liegt und die Bahngeschwindigkeit größer als 4 m/s (880 feet pro min) ist.

5. Verfahren nach einem der vorhergehenden Ansprüche, worin das LLDPE ein Ethylenmischpolymeres umfaßt, das von 1 bis 40 Gew.-% wenigstens eines Comonomeren, ausgewählt aus der durch die Formel H₂C=CH-R wiedergegebenen Gruppe, worin R eine Kohlenwasserstoffeinheit mit 1 bis 10 Kohlenstoffatomen darstellt, enthält.

6. Verfahren nach einem der vorhergehenden Ansprüche, worin das LLDPE ein Mischpolymeres von Ethylen mit wenigstens einem Comonomeren aus der aus Buten, 4-Methyl-penten-(1), Hexen und Octen bestehenden Gruppe umfaßt.

7. Verfahren nach Anspruch 6, worin das LLDPE ein Mischpolymeres von Ethylen und Octen umfaßt.

8. Verfahren nach einem der vorhergehenden Ansprüche, worin das LLDPE eine Dichte im Bereich von 0,88 bis 0,945 g/cm³ besitzt.

9. Verfahren nach einem der vorhergehenden Ansprüche, worin I₂ im Bereich von 1,5 bis 6 g/10 min liegt.

10. Verfahren nach einem der vorhergehenden Ansprüche, worin dieses LLDPE in Verbindung mit wenigstens einer der folgenden Maßnahmen eingesetzt wird:
(a) einer Einrichtung für konstanten Zug;
(b) einem Kühlgas, welches auf die Folie zwischen dem Spritzwerkzeug und der Haltewalze beim Spritzen und Ziehen der Folie gerichtet ist;
(c) einem Extruder, in welchem die Ziehwalze nicht mehr als 15 cm (6 Zoll) von dem Spritzwerkzeug angeordnet ist; und
(d) einem in das LLDPE-Polymere eingemischten Olefinpolymeren.

11. Verfahren nach einem der Ansprüche 1 bis 9, worin die Folie ohne Verwendung spezieller Ausrüstung zur Verbesserung des Ziehresonanzbeständigkeit spritzgegossen oder extrusionsbeschichtet wird, und die Bahngeschwindigkeit oberhalb 1,5 m/s (300 feet pro min) liegt.

12. Verfahren nach einem der Ansprüche 1 bis 9, worin die Folie ohne Verwendung eines auf den geschmolzenen Film zur Verbesserung der Ziehresonanzbeständigkeit einwirkenden Eliminators für die Ziehresonanz oder einer Zugkraftsteuereinrichtung spritzgegossen oder extrusionsbeschichtet wird, und die Bahngeschwindigkeit oberhalb 1,5 m/s (300 feet pro min) liegt.

## Revendications

1. Procédé pour augmenter la vitesse de ligne de la coulée par extrusion ou de l'extrusion-laminage d'un film de polymère LLDPE, ledit polymère LLDPE étant constitué essentiellement d'éthylène copolymérisé avec de 1 % à 60 % en poids d'au moins un alcène en C₃ à C₁₂, pour la formation d'un copolymère ayant une masse volumique comprise dans l'intervalle allant de 0,87 à 0,955 g/cm³ et un indice de fluidité à l'état fondu I₂, tel que déterminé par la méthode ASTM D-1238-E, compris dans l'intervalle allant de 0,1 à 25 g/10 minutes, **caractérisé** en ce que l'on choisit le polymère LLDPE de façon à ce qu'il ait un rapport I₁₀/I₂ compris dans l'intervalle allant de 4,0 à 8,3, la valeur de I₁₀ étant déterminée par la méthode ASTM D-1238-N.

2. Procédé selon la revendication 1, dans lequel ledit rapport est inférieur à 8,0.

3. Procédé selon la revendication 2, dans lequel ledit rapport est inférieur à 7,0.

4. Procédé selon l'une quelconque des revendications précédentes, dans lequel I₂ est compris dans l'intervalle allant de 1 à 10 g/10 minutes et la vitesse de ligne est supérieure à 4 m/s (800 pieds par minute).

5. Procédé selon l'une quelconque des revendications précédentes, dans lequel le LLDPE comprend un copolymère d'éthylène renfermant de 1 % à 40 % d'au moins un comonomère choisi parmi les composés représentés par la formule H₂C=CH-R, dans laquelle R représente un fragment hydrocarboné contenant de 1 à 10 atomes de carbone.

6. Procédé selon l'une quelconque des revendications précédentes, dans lequel le LLDPE comprend un copolymère d'éthylène avec au moins un comonomère pris dans le groupe constitué par le butène, le 4-méthyl-1-pentène, l'hexène et l'octène.

7. Procédé selon la revendication 6, dans lequel le LLDPE comprend un copolymère d'éthylène et d'octène.

8. Procédé selon l'une quelconque des revendications précédentes, dans lequel le LLDPE a une masse volumique comprise dans l'intervalle allant de 0,88 à 0,945 g/cm³.

9. Procédé selon l'une quelconque des revendications précédentes, dans lequel I₂ est compris dans l'intervalle allant de 1,5 à 6 g/10 minutes.

10. Procédé selon l'une quelconque des revendications précédentes, dans lequel ledit LLDPE est utilisé conjointement avec au moins l'un des éléments suivants :
(a) un dispositif à tension constante,
(b) un gaz refroidisseur qui est dirigé sur le film, entre la filière d'extrusion et le rouleau pinceur, lors de l'extrusion et du tirage du film,
(c) un dispositif d'extrusion dans lequel le rouleau tireur est situé à pas plus de 15 cm (6 pouces) de la filière d'extrusion, et
(d) un polymère d'oléfine mélangé au LLDPE.

11. Procédé selon l'une quelconque des revendications 1 à 9, dans lequel le film est coulé par extrusion ou appliqué par extrusion sans l'utilisation d'un équipement particulier destiné à améliorer la résistance à la résonance lors du tirage, et la vitesse de ligne est supérieure à 1,5 m/s (300 pieds par minute).

12. Procédé selon l'une quelconque des revendications 1 à 9, dans lequel le film est coulé par extrusion ou appliqué par extrusion sans l'utilisation d'un dispositif d'élimination de la résonance lors du tirage ou d'un dispositif de réglage de la tension, agissant sur le film fondu pour améliorer la résistance à la résonance lors du tirage, et la vitesse de ligne est supérieure à 1,5 m/s (300 pieds par minute).
